# EUROPÄISCHE PATENTSCHRIFT

(11) **EP 1 767 819 B1**
(45) Veröffentlichungstag und Bekanntmachung des Hinweises auf die Patenterteilung: **09.07.2008**
(21) Anmeldenummer: 05450156.4
(22) Anmeldetag: 22.09.2005
(51) Int. Cl.: F16H 59/02, F16C 11/06

(54) **Schalthebelanordnung**
Shift lever device
Dispositif de levier de changement de vitesses

(43) Veröffentlichungstag der Anmeldung: 28.03.2007
(73) Patentinhaber: DGS Druckguss Systeme AG, 9015 St. Gallen (CH)
(72) Erfinder: Schmid, Hugo, 9621 Oberhelfenschwil (CH); Huber, Thomas, 9100 Herisau (CH)
(74) Vertreter: Babeluk, Michael

(56) Entgegenhaltungen:
- EP-A- 0 032 883
- EP-A- 0 667 470
- EP-A- 0 727 595
- EP-A- 0 728 964
- EP-A- 0 786 608
- DE-A1- 4 227 413
- FR-A- 2 676 843
- US-A1- 2003 140 723

## Beschreibung

Die Erfindung betrifft eine Schalthebelanordnung für ein manuelles Schaltgetriebe mit einer kugelförmigen Schalthebelführung mit einem Schalthebellager, wobei die Schalthebelführung als Druckgussteil ausgebildet ist, und wobei die Oberfläche der kugelförmigen Schalthebelführung das mit dieser einstückig und einstofflich ausgeführte Schalthebellager ausbildet.

Aus den Veröffentlichungen US 5 505 103 und US 4 693 135 A sind Schalthebelanordnungen mit kugelförmigen Schalthebelführungen bekannt, welche in einen kugelförmigen umgebenden Lagerkäfig aus Kunststoff gelagert sind.

Weiters ist es bekannt, die Lagerung des Schalthebels durch einen mit Kunststoff gegossenen Schalthebelführung auszubilden. Dies erfordert allerdings einen hohen Fertigungsaufwand.

Die EP 0 032 883 A2, die alle Merkmale des Oberbegriffes des Anspruchs 1 zeigt, offenbart eine Schalthebelanordnung mit einer kugelförmigen Schalthebelführung, welche als Druckgussteil ausgebildet ist. Die Schalthebelführung weist dabei eine Aufnahme für einen Seilzug auf, über welchen eine Schalteinrichtung betätigt wird.

Weiters ist aus der EP 0 786 608 A2 eine Außenschaltung für ein Wechselgetriebe eines Kraftfahrzeuges bekannt, bei der ein Schalthebel mit einer Kugel in einer Lagerschale aus Kunststoff in einem Schalthebelgehäuse gelagert ist. Rechtwinkelig zum Schalthebel ist ein vorstehender Wählfinger angeordnet, welcher mit dem Schalthebel fest verschweißt ist, oder welcher einteilig mit der Gelenkkugel aus Kunststoff in einem Spritzvorgang gemeinsam hergestellt ist. Beide Varianten haben den Nachteil eines relativ hohen Fertigungsaufwandes.

Aufgabe der Erfindung ist es, den Fertigungsaufwand bei einer Schalthebelführung der eingangs genannten Art zu reduzieren.

Erfindungsgemäß erfolgt dies dadurch, dass die Schalthebelanordnung einen von der Schalthebelführung vorstehenden Wählfinger aufweist, welcher - zumindest teilweise - mit der Schalthebelführung mitgegossen ist und dass auf dem Wählfinger ein, vorzugsweise aus Kunststoff bestehender Anschlag aufgesteckt ist Dadurch, dass die Schalthebelführung aus Leichtmetall besteht, kann dessen Baugewicht wesentlich reduziert werden.

In weiterer Ausführung der Erfindung kann vorgesehen sein, dass die Verbindung zwischen dem Wählfinger und dem Anschlag durch eine Schnappverbindung gebildet ist.

Das Schalthebellager der Schalthebelführung wird bevorzugt durch die unbehandelte Oberfläche der Schalthebelführung gebildet. Dadurch können Bearbeitungsschritte eingespart werden. Ist die Qualität der Oberflächenbeschaffenheit nach dem Druckgussvorgang nicht ausreichend, so ist selbstverständlich eine zusätzliche Bearbeitung der Oberfläche der Schalthebelführung denkbar.

Um Material einzusparen und Lunkerbildung beim Gussvorgang zu vermeiden, ist es vorteilhaft, wenn die Schalthebelführung zumindest eine Vertiefung zur Materialeinsparung aufweist.

In weiterer Ausführung der Erfindung kann vorgesehen sein, dass auf dem Schalthebel ein vorzugsweise aus Kunststoff bestehender Dämpfungsteil angeordnet ist, wobei die Verbindung zwischen dem Schalthebel und dem Dämpfungsteil vorzugsweise als Schnappverbindung ausgebildet ist.

Die Erfindung wird im Folgenden anhand der Figuren näher erläutert. Es zeigen:

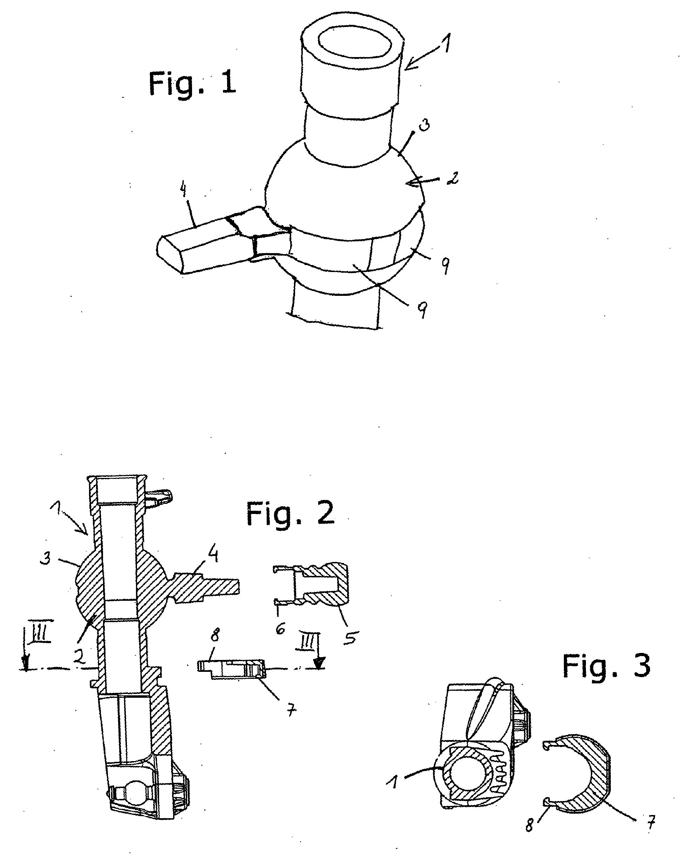

- Fig. 1: eine erfindungsgemäße Schalthebelanordnung in einer Schrägansicht;
- Fig. 2: die Schalthebelanordnung in einem Längsschnitt in einer Explosionsdarstellung; und
- Fig. 3: die Schalthebelanordnung in einem Schnitt gemäß der Linie III-III in Fig. 2.

Die Schalthebelanordnung 1 für ein manuelles Schaltgetriebe weist eine Schalthebelführung 2 auf, deren kugelförmige Oberfläche das Schalthebellager 3 ausbildet.

Die Schalthebelanordnung 1 ist als Druckgussteil konzipiert und besteht aus Leichtmetall, beispielsweise einer Aluminium- oder Magnesiumverbindung. Um Lunkerbildung beim Gießen zu vermeiden, weist die kugelförmige Schalthebelführung Vertiefungen 9 auf. Im Ausführungsbeispiel ist die Oberfläche der Schalthebelführung 2 unbehandelt, wodurch Bearbeitungsschritte eingespart werden können.

Einstückig mit der Schalthebelführung 2 ist ein vom Schalthebellager 3 vorstehender Wählfinger 4 ausgebildet. Mit dem Wählfinger 4 ist ein Anschlagteil 5 über eine Schnappverbindung 6 lösbar verbunden. Der Anschlag 5 kann beispielsweise aus POM ( PolyOxyMethylen) bestehen.

Weiters kann ein Dämpfungsteil 7, ebenfalls über eine Schnappverbindung 8, mit der Schalthebelanordnung 1 lösbar verbunden sein. Auch der Dämpfungsteil 7 besteht vorteilhafterweise aus Kunststoff, beispielsweise POM.

## Patentansprüche

1. Schalthebelanordnung (1) für ein manuelles Schaltgetriebe mit einer kugelförmigen Schalthebelführung (2) mit einem Schalthebellager (3), wobei die Schalthebelführung (2) als Druckgussteil ausgebildet ist, und wobei die Oberfläche der kugelförmigen Schalthebelführung (2) das mit dieser einstückig und einstofflich ausgeführte Schalthebellager (3) ausbildet, **dadurch gekennzeichnet, dass** die Schalthebelanordnung (1) einen von der Schalthebelführung (2) vorstehenden Wählfinger (4) aufweist, welcher - zumindest teilweise - mit der Schalthebelführung (2) mitgegossen ist, und dass auf dem Wählfinger (4) ein, vorzugsweise aus Kunststoff bestehender Anschlag (5) aufgesteckt ist.

2. Schalthebelanordnung (1) nach Anspruch 1, **dadurch gekennzeichnet, dass** die Schalthebelführung (2) aus Leichtmetall besteht.

3. Schalthebelanordnung (1) nach Anspruch 1 oder 2, **dadurch gekennzeichnet, dass** die Verbindung zwischen dem Wählfinger (4) und dem Anschlag (5) durch eine Schnappverbindung (6) gebildet ist.

4. Schalthebelanordnung (1) nach einem der Ansprüche 1 bis 3, **dadurch gekennzeichnet, dass** die unbearbeitete Oberfläche der Schalthebelführung (2) das Schalthebellager (3) ausbildet.

5. Schalthebelanordnung (1) nach einem der Ansprüche 1 bis 4, **dadurch gekennzeichnet, dass** die Schalthebelführung (2) zumindest eine Vertiefung (9) zur Materialeinsparung aufweist.

6. Schalthebelanordnung (1) nach einem der Ansprüche 1 bis 5, **dadurch gekennzeichnet, dass** auf dem Schalthebel ein vorzugsweise aus Kunststoff bestehender Dämpfungsteil (7) angeordnet ist, wobei die Verbindung zwischen dem Schalthebel und dem Dämpfungsteil (7) vorzugsweise als Schnappverbindung (6) ausgebildet ist.

## Claims

1. Gearshift lever assembly (1) for a manual transmission including a ball-shaped shift lever guiding means (2) with a shift lever bearing (3), where the shift lever guiding means (2) is configured as a die-cast part, and where the surface of the ball-shaped shift lever guiding means (2) forms the shift lever bearing (3), which is integral with and of the same material as said shift lever guiding means, **characterised in that** the gearshift lever assembly (1) has a selector finger (4) projecting from the shift lever guiding means (2), which selector finger (4) is at least partially cast together with the shift lever guiding means (2), and further that a stop (5) preferably made of plastic is stuck onto the selector finger (4).

2. Gearshift lever assembly (1) according to claim 1, **characterised in that** the shift lever guiding means (2) is made of light metal.

3. Gearshift lever assembly (1) according to claim 1 or 2, **characterised in that** the stop (5) is attached to the selector finger (4) by means of a snap-on connection (6).

4. Gearshift lever assembly (1) according to any of claims 1 to 3, **characterised in that** the untooled surface of the shift lever guiding means (2) forms the shift lever bearing (3).

5. Gearshift lever assembly (1) according to any of claims 1 to 4, **characterised in that** the shift lever guiding means (2) has at least one indentation to save material.

6. Gearshift lever assembly (1) according to any of claims 1 to 5, **characterised in that** a damper part (7) preferably made of plastic is provided on the shift lever, the damper part (7) being attached to the shift lever preferably by a snap-on connection (6).

## Revendications

1. Dispositif de levier de changement de vitesses (1) pour une boîte de vitesses, manuelle, comportant un moyen de guidage (2) du levier de changement de vitesses en forme de rotule avec un palier (3) de levier de changement de vitesses,
le moyen de guidage (2) du levier de changement de vitesses étant une pièce de fonte sous pression, et
la surface du moyen de guidage (2) de forme sphérique du levier de changement de vitesses (2), est réalisée avec celui-ci en une seule pièce et dans la même matière que le palier (3) de levier de changement de vitesses,
**caractérisé en ce que**
le dispositif de levier de changement de vitesses (1) comporte un doigt de sélecteur (4) en saillie du moyen de guidage (2) du levier de changement de vitesses, ce doigt sélecteur étant réalisé au moins en partie par fonte de sous pression avec le moyen de guidage (2) du levier de commutation (2), et
le doigt de sélecteur (4) comporte une butée (5) réalisée de préférence en matière plastique.

2. Dispositif de levier de changement de vitesses (1) selon la revendication 1,
**caractérisé en ce que**
le moyen de guidage (2) du levier de changement de vitesses est en métal léger.

3. Dispositif de levier de changement de vitesses (1) selon la revendication 1 ou 2,
**caractérisé en ce que**
la liaison entre le doigt de sélecteur (4) et la butée (5) est réalisée par une liaison par enclipsage (6).

4. Dispositif de levier de changement de vitesses (1) selon l'une des revendications 1 à 3,
**caractérisé en ce que**
la surface non usinée du moyen de guidage (2) du levier de changement de vitesses constitue le palier du levier de commutation (3).

5. Dispositif de levier de changement de vitesses (1) selon l'une des revendications 1 à 4,
**caractérisé en ce que**
le moyen de guidage (2) du levier de commutation comporte au moins une cavité (9) pour économiser de la matière.

6. Dispositif de levier de changement de vitesses (1) selon l'une des revendications 1 à 5,
**caractérisé en ce que**
le levier de changement de vitesses comporte de préférence une pièce d'amortissement (7) en matière plastique, et
la liaison entre le levier de changement de vitesses et la pièce d'amortissement (7) est réalisée de préférence sous la forme d'une liaison par enclipsage (6).
